# EUROPEAN PATENT SPECIFICATION

(11) **EP 4 323 457 B1**
(45) Date of publication and mention of the grant of the patent: **04.06.2025**
(21) Application number: 22719310.9
(22) Date of filing: 13.04.2022
(51) Int. Cl.: D21H 19/20, D21H 19/60, D21H 23/56, D21H 21/16, D21H 17/62, C08L 93/04, C08L 3/10

(54) **POLYMER DISPERSION, ITS USE AND METHOD FOR ITS MANUFACTURE**
POLYMERDISPERSION, SEIN VERWENDUNG UND SEIN HERSTELLUNGSVERFAHREN
DISPERSION DE POLYMÈRE, SON UTILISATION ET SON PROCÉDÉ DE SYNTHÈSE

(30) Priority: 14.04.2021 FI 20215441
(43) Date of publication of application: 21.02.2024
(73) Proprietor: Kemira OYJ, Helsinki 00180 (FI)
(72) Inventor: JOKINEN, Taru, 02271 Espoo (FI); LEPO, Anneli, 02271 Espoo (FI); LIU, Yingying, 02271 Espoo (FI); NIKKARINEN, Jussi, 02271 Espoo (FI); STANKEVICH, Anna, 02271 Espoo (FI)
(74) Representative: Berggren Oy
(86) International application number: PCT/FI2022/050247
(87) International publication number: WO 2022/219245

(56) References cited:
- CA-A1- 2 081 786
- JP-A- 2017 066 579
- US-A1- 2020 385 499

## Description

The invention relates to a polymer dispersion, its use and to a method for manufacture of a polymer dispersion according to preambles of the enclosed independent claims.

In manufacture of cellulosic fibre webs, such as paper, board and the like, the properties of the produced webs are often improved by addition of various chemicals during and after the cellulosic fibre web formation. For example, surface sizing is commonly used to improve strength and/or water resistance of the produced cellulosic fibre webs, or otherwise enhance the surface properties of such fibre webs. In surface sizing an aqueous solution or an aqueous dispersion comprising one or more sizing agents is applied on the surface of the cellulosic fibre web whereafter the web is dried.

There is a general trend and desire to decrease the use of materials which are based on non-renewable sources, especially this applies to petroleum-based raw materials. Within the paper and board industry there is an effort to decrease the use of synthetic polymers in manufacture of cellulosic fibre webs in order to further increase the sustainability of the overall process. Sizing agents used in the surface sizing often comprise, or are based on, synthetic polymers, such as poly(styrene acrylate). It would be desirable to reduce the amount of synthetic polymers, in particular styrene, in paper and board making. At the same time there is a need to obtain at least similar, preferably better, surface sizing results for the sized paper, board or the like in view of the strength, water resistance and/or other surface properties.

Rosin, as well as its derivatives, could be seen as a sustainable alternative for synthetic polymers. Aqueous dispersions of rosin and its derivatives have already been used as hydrophobation agents in papermaking. The use of rosin, however, conventionally requires use of alum. Furthermore, the softening point of rosin and its derivatives is generally too high for present surface sizing applications in order to obtain satisfactory surface sizing results. The particle size of rosin dispersions is also often too large for obtaining good surface sizing results. It has been noted that by mechanical mixing and other corresponding techniques it is hard to obtain a rosin dispersion with a small particle size. JP2017066579A discloses a rosin-based emulsion sizing agent obtained by emulsifying an emulsion of a reinforced resin in the presence of a polymeric dispersant, which is an anionic copolymer or a salt thereof. The reinforced rosin and copolymeric salt are added in a subsequent (third) step and no polysaccharide is present. CA2081786A1 discloses blends of fumarated rosin and polyacrylamide. US2020/385499A1 discloses surface sizing composition comprising a metal salt and an aqueous polymer dispersion, wherein the aqueous polymer dispersion is an aqueous polymer dispersion obtainable by free radical emulsion copolymerizing ethylenically unsaturated monomers.

Consequently, there is a need for more sustainable alternative which is suitable for surface sizing of cellulosic fibre webs.

An object of this invention is to minimise or possibly even eliminate the disadvantages existing in the prior art.

Another object of the present invention is to provide a polymer dispersion which is more sustainable and which provides good surface sizing results when used for surface sizing of a cellulosic fibre web.

Yet another object of the present invention is to provide a polymer dispersion which preferably has a small particle size.

These objects are attained with the invention having the characteristics presented below in the characterising parts of the independent claims.

Some preferred embodiments of the invention are presented in the dependent claims.

A typical polymer dispersion according to the present invention comprises polymer particles dispersed in an aqueous continuous phase, wherein the polymer particles are obtained by a radical polymerisation of one or more feeds of vinyl monomers in an aqueous polymerisation medium comprising polysaccharide, wherein the vinyl monomers comprise at least one alkyl (meth)acrylate, wherein a rosin component is dissolved into at least one of the feeds of the vinyl monomers before the radical polymerisation of the vinyl monomers.

A typical use according to the present invention of the polymer dispersion according to the invention is for surface sizing of a cellulosic fibre web, such paper, board or the like, preferably in an amount of 0.1 - 10 kg/t, more preferably 0.5 - 6 kg/t, given as dry cellulosic fibre web.

A typical method according to the present invention for producing a polymer dispersion comprising polymer particles in an aqueous continuous phase for surface sizing of a cellulosic fibre web, such as paper, board or the like, comprises
- obtaining vinyl monomer solution, which comprises alkyl (meth)acrylate monomers,
- dissolving a rosin component to the vinyl monomer solution,
- feeding at least one feed of the vinyl monomer solution comprising the rosin component and a polymerisation initiator into an aqueous polymerisation medium comprising a polysaccharide,
- conducting a radical polymerisation of the vinyl monomer solution comprising the rosin component.

Now it has been surprisingly found that by dissolving a rosin component to a vinyl monomer solution before the radical polymerisation of those vinyl monomers in an aqueous polymerisation medium, it is possible to obtain a polymer dispersion, which is more sustainable as it produced by using less synthetic petroleum-based monomers. The polymer dispersion is also able to show good or even improved surface sizing results when it is applied on the surface of the cellulosic fibre web in surface sizing. When the rosin component is first dissolved in vinyl monomer solution, the radical polymerisation of the vinyl monomers is conducted in the presence of the rosin component, which becomes a part of the polymer particles. It is assumed that the rosin component becomes permanently incorporated into the structure of the polymer particles formed by the radical polymerisation of the vinyl monomers feed(s). Without having a theoretical explanation of the reactions and mechanisms involved, it has been observed that the obtained polymer dispersion is able to provide effective sizing effect without tackiness problems when rosin component is dissolved into at least one of the feeds of the used monomers and thus present during the polymerisation.

Typical polymer dispersion according to the present invention comprises polymer particles dispersed in an aqueous continuous phase. The polymer dispersion may comprise polymer particles, which have a particle size D50 ≤200 nm, preferably ≤120 nm, more preferably ≤80 nm, even more preferably ≤55 nm, sometimes even ≤ 45 nm. The particle size D50 for the polymer particles of the dispersion may be, for example, in a range of 10 - 200 nm, preferably 15 - 120 nm, more preferably 20 - 80 nm, even more preferably 25 - 55 nm, sometimes even 25 - 45 nm. The polymer dispersion may comprise polymer particles, which have a particle size D90 ≤500 nm, preferably ≤200 nm, more preferably ≤140 nm, even more preferably ≤95 nm. The particle size D90 for the polymer particles of the dispersion may be, for example, in a range of 20 - 500 nm, preferably 25 - 200 nm, more preferably 30 - 140 nm, even more preferably 35 - 95 nm. All particle sizes are measured by using Zetasizer Nano ZS, Malvern. In the present context the particle size D50 refers to the value for 50^{th} percentile of a volume based distribution and the particle size D90 refers to the value for 90^{th} percentile of a volume based distribution. It was unexpectedly observed that when the rosin component is dissolved into the vinyl monomer solution(s) before the radical polymerisation, the obtained polymer dispersion has a low particle size D50 and D90 value. The obtained values indicate also that the particle size distribution is relatively narrow. All this is advantageous in view of the surface sizing results.

The polymers in the dispersion may have a weight average molecular weight Mw in the range 1000 - 100 000 g/mol, preferably 5000 - 80 000 g/mol, more preferably 10 000 - 40 000 g/mol, analysed from the final dispersion. The polymers in the dispersion may have a number average molecular weight Mn in the range 1000 - 20 000 g/mol, preferably 2000 - 15 000 g/mol, more preferably 3000 - 10 000 g/mol, analysed from the final dispersion. The weight average and number average molecular weights may be determined, for example, by size exclusion chromatography.

The polymer dispersion, as dry, may have a glass transition temperature T_{g} in a range of 10 - 90 °C, preferably 25 - 80 °C, more preferably 35 - 75 °C or even more preferably 38 - 70 °C.

The polymer dispersion according to the present invention is obtainable by a radical polymerisation, preferably by a free radical polymerisation, of one or more feeds of vinyl monomers. The vinyl monomers comprise at least one alkyl (meth)acrylate. The polymer dispersion may be obtained by radical polymerisation of one type of alkyl (meth)acrylate. Alternatively, the polymer dispersion may be obtained by a radical polymerisation of several, such as two, three or more, different vinyl monomers, of which at least one is alkyl (meth)acrylate. Preferably the polymer dispersion is obtained by a radical polymerisation of feed(s) of two or three different vinyl monomers of which at least one is alkyl (meth)acrylate. The different vinyl monomers may be fed as separate feeds, or one feed of vinyl monomers may comprise a mixture of two, three or more different vinyl monomers.

The vinyl monomer(s), of which at least one is alkyl (meth)acrylate, is/are obtained in solution form, i.e. liquid form, or prepared to form solution(s). The vinyl monomer solution(s) are fed to the aqueous polymerisation medium as one or more feeds of vinyl monomers. The resin component is dissolved to at least one of the vinyl monomer solution(s) or feeds before the start of the radical polymerisation of the vinyl monomers. At least one solution or feed of the vinyl monomers thus comprises a rosin component. Vinyl monomers to be used in the radical polymerisation are in form of a vinyl monomer solution(s), which may contain small amounts of water and/or other solvents. However, the amounts of water and/or other solvents in the monomer solution(s), and consequently in monomer feeds, are preferably minimised. Preferably, each vinyl monomer to be used in the radical polymerisation is in form of a monomer solution or feed, which is essentially free of water. Preferably the vinyl monomer solution or feed is also essentially free of other solvents, e.g. organic solvents. In the present context the term "essentially free" means that the vinyl monomer solution comprises less than 1 weight-%, preferably less than 0.5 weight-%, more preferably less than 0.1 weight-%, of water and/or other solvents. It has been found that the rosin component can be effectively and uniformly dissolved into the vinyl monomer solution or feed or at least one of the vinyl monomer solutions or feeds before the radical polymerisation in the aqueous medium. The vinyl monomer solution(s) or feed(s) function as a solvent for the rosin component. The rosin component is preferably completely dissolved into the vinyl monomer solution(s) or feed(s), and after the dissolution preferably no solid or semi-solid rosin components can be observed. By dissolving the rosin component into the feed of vinyl monomer(s), it is possible to guarantee that the rosin component is uniformly present in the polymerisation and becomes well incorporated with the polymer structure. Furthermore, it is possible to avoid use of additional organic solvents in the process, as the vinyl monomer solution(s) or feed(s) function as a solvent for the rosin component. This makes the manufacture of the polymer dispersion simple and fast when there is no need to remove additional solvents from the aqueous phase of the polymer dispersion after the radical polymerisation. The use of vinyl monomer solution(s) or feed(s) as a solvent for the rosin component may also provide advantages in the quality of the obtained polymer dispersion, e.g. reduced tackiness.

At least one feed of the vinyl monomer solution(s) is fed with at least one polymerisation initiator into an aqueous polymerisation medium and the radical polymerisation of one or more feeds of the vinyl monomers is conducted in the presence of the rosin component. At the present it is assumed that, without wishing to be bound by a theory, that the rosin component may be integrated at least partly within the polymer structure formed during the polymerisation. The rosin component may thus preferably become an inseparable part of the polymer particles formed.

According to one embodiment of the invention the aqueous polymerisation medium may comprise an additional solvent during the radical polymerisation. The aqueous polymerisation medium may comprise at most 50 %, preferably at most 35 %, more preferably at most 15 %, of an additional solvent other than water during the polymerisation. The additional solvent may be an alcohol, such as ethanol or isopropanol. The additional solvent may be removed, for example by distillation, from the polymer dispersion after the polymerisation has been completed. According to one preferable embodiment the obtained polymer dispersion may comprise at most 10 %, preferably at most 5 %, more preferably at most 1 %, of an additional solvent other than water.

According to one especially preferred embodiment the aqueous polymerisation medium is free of other solvents than water, i.e. the aqueous polymerisation medium is free of organic solvents, such as alcohols, e.g. ethanol and isopropanol.

In the present context the term "rosin component" denotes rosin and its derivatives. The rosin component is insoluble in water and therefore it is dissolved in the solution of the vinyl monomers before the radical polymerisation. The rosin component may be a mixture of different rosins. The rosin component used in the present invention may preferably comprise rosin and/or rosin derivative, such as one or more rosin esters, dimerised rosins, polymerised rosins, hydrogenated rosins, fortified rosins and unfortified rosins. According to one preferable embodiment of the present invention the rosin component may be selected from a group consisting of tall oil rosin, wood rosin, gum rosin, their derivatives, and any of their mixtures. For example, the rosin component may be a mixture of tall oil rosin and gum oil rosin. The use of different rosins or their mixtures as the rosin component may provide a possibility to influence the properties of the obtained polymer dispersion, at least to a certain degree.

According to one preferable embodiment of the invention the rosin component may be a fortified rosin. Fortified rosins are obtained by adducting an unsaturated carboxylic acid to a rosin. Suitable carboxylic acids are, for example, fumaric acid, acrylic acid, maleic acid or itaconic acid. Maleic acid and fumaric acid are being preferred. It has been observed that fortified rosin is very effectively dissolved in the vinyl monomer solution, which makes the process of producing the polymer dispersion easy and efficient.

According to one preferable embodiment of the present invention the rosin component may have a softening point in a range of 15 - 150 °C , preferably 40 - 140 °C, more preferably 55 - 130 °C, even more preferably 75 - 125 °C. According to one embodiment the rosin component is essentially free of monocyclic terpene compounds.

The rosin component may be in form of a liquid or solid when it is dissolved or added into the solution of the vinyl monomer(s). The rosin component may be dissolved in the vinyl monomer solution at a temperature of 15 - 40 °C or 20 - 40 °C. In general, the dissolving of the rosin component may be achieved without external heating of the vinyl monomer solution or feed. The dissolving time can be easily determined by few experiments, and it usually depends on the monomers used, rosin component used as well as the amount of the rosin component to be dissolved. Typical dissolution time varies between 15 - 60 min.

The final polymer dispersion may comprise the rosin component in an amount of 0.01 - 70 weight-%, preferably 1 - 60 weight-%, more preferably 1.5 - 49 weight-%, calculated from the total weight of the vinyl monomers and the rosin component, as dry. The present invention allows the use of the rosin component within wide limits, which enables the flexible creation of polymer dispersions with different properties.

According to one embodiment of the invention the polymer dispersion may comprise 5 - 70 weight-%, preferably 7.5 - 49 weight-%, more preferably 10 - 35 weight-%, even more preferably 15 - 34 weight-%, of the rosin component, calculated from the total weight of the vinyl monomers and the rosin component, as dry. As the rosin component is dissolved to the vinyl monomer solution before the polymerisation, it is possible to increase the amount of rosin in the obtained polymer dispersion, without compromising the quality of the polymer dispersion, for example particle size of the dispersion, and the surface sizing effects obtained.

According to another embodiment of the invention the polymer dispersion may comprise 0.05 - 4.5 weight-%, preferably 0.5 - 3.5 weight-%, more preferably 1.5 - 3.0 weight-%, of the rosin component, calculated from the total weight of the vinyl monomers and the rosin component, as dry. Even when used in relatively small amounts, the rosin component effectively influences the properties of the obtained polymer dispersion. It is presently speculated that the rosin component may act as a chain transfer agent during the radical polymerisation and thus controls the structure and molecular weight of the polymer formed by the radical polymerisation.

The vinyl monomers may comprise or consist of alkyl (meth)acrylates, which can be selected from as C1-C18 alkyl (meth)acrylates, preferably C1-C12 alkyl (meth)acrylates, more preferably C1-C4 alkyl (meth)acrylates, and any of their mixtures. Vinyl monomers may be selected from methyl acrylate; methyl methacrylate; ethyl acrylate; ethyl methacrylate; n-propyl or iso-propyl acrylate and corresponding propyl methacrylates; n-butyl, iso-butyl, tert-butyl or 2-butyl acrylate and the corresponding butyl methacrylates; n-pentyl or neopentyl acrylate and the corresponding pentyl methacrylates; 2-hexyl or 2-ethylhexyl acrylate and corresponding methacrylates; n-octyl or isooctyl acrylate and corresponding methacrylates; decyl acrylate; decyl methacrylate; dodecyl acrylate; dodecyl methacrylate; lauryl acrylate; lauryl methacrylate; stearyl acrylate; stearyl methacrylate. Preferably vinyl monomers may be selected from C1-C4-alkyl acrylates, C1-C4-alkyl methacrylates or any of their mixtures, e.g. n-butyl, iso-butyl, tert-butyl or 2-butyl acrylate and the corresponding butyl methacrylates; methyl acrylate, methyl methacrylate, ethyl acrylate, ethyl methacrylate, propyl acrylate or propyl methacrylate. It is possible that the vinyl monomers may comprise or consists of a mixture of at least two isomeric butyl acrylates, e.g. a mixture of n-butyl acrylate and methyl methacrylate or a mixture of n-butyl acrylate and tert-butyl acrylate.

According to one embodiment of the present invention the vinyl monomers may comprise at least one first monomer (a) which is selected from alkyl (meth)acrylates, such as C1-C18 alkyl (meth)acrylates, preferably C1-C12 alkyl (meth)acrylates, more preferably C1-C4 alkyl (meth)acrylates, and any of their mixtures. Suitable first monomer (a) may be, for example, methyl acrylate; methyl methacrylate; ethyl acrylate; ethyl methacrylate; n-propyl or iso-propyl acrylate and corresponding propyl methacrylates; n-butyl, iso-butyl, tert-butyl or 2-butyl acrylate and the corresponding butyl methacrylates; n-pentyl or neopentyl acrylate and the corresponding pentyl methacrylates; 2-hexyl or 2-ethylhexyl acrylate and corresponding methacrylates; n-octyl or isooctyl acrylate and corresponding methacrylates; decyl acrylate; decyl methacrylate; dodecyl acrylate; dodecyl methacrylate; lauryl acrylate; lauryl methacrylate; stearyl acrylate; stearyl methacrylate. According to one preferable embodiment the first monomer (a) is selected from C1-C4-alkyl acrylates, C1-C4-alkyl methacrylates or any of their mixtures, e.g. n-butyl, iso-butyl, tert-butyl or 2-butyl acrylate and the corresponding butyl methacrylates; methyl acrylate, methyl methacrylate, ethyl acrylate, ethyl methacrylate, propyl acrylate or propyl methacrylate. The first monomer (a) may be a mixture of at least two isomeric butyl acrylates. For example, the first monomer (a) may be a mixture of n-butyl acrylate and methyl methacrylate or a mixture of n-butyl acrylate and tert-butyl acrylate.

According to one embodiment of the present invention the vinyl monomers may further comprise at least one second monomer (b) which may be selected from styrene, substituted styrenes, such as α-methylstyrene, vinyltoluene, ethylvinyltoluene, chloromethylstyrene, and any of their mixtures.

The polymer dispersion may be obtained by radical polymerisation of one or more feeds of vinyl monomers, which comprise 51 - 100 weight-%, preferably 55 - 99.5 weight-%, more preferably 60 - 99 weight-% or 65 - 99 weight-%, of the first monomer (a), and/or 0 - 49 weight-%, preferably 0.5 - 45 weight-%, more preferably 1 - 40 weight-% or 1 - 35 weight-%, of the second monomer (b), calculated from the total weight of the monomers, as dry.

According to one preferable embodiment of the present invention the polymer dispersion is obtained by radical polymerisation of at least one feed of vinyl monomers, which comprise alkyl (meth)acrylates, for example as defined above, in absence of styrene and substituted styrene monomers. The polymer dispersion may thus be obtained without a second monomer (b) selected from styrene, substituted styrenes, such as α-methylstyrene, vinyltoluene, ethylvinyltoluene, chloromethylstyrene, and any of their mixtures. The obtained polymer dispersion may thus be free of structural units originating from monomers selected from styrene, substituted styrenes, such as α-methylstyrene, vinyltoluene, ethylvinyltoluene, chloromethylstyrene, and any of their mixtures. It has been observed that when the radical polymerisation is conducted in the presence of the rosin component, the obtained polymer dispersion obtains glass transition temperature which makes it suitable for use in surface sizing of paper, board or the like. Thus it is possible to even completely replace the styrene in the polymer dispersion, which thus becomes free of styrene residuals.

The obtained polymer dispersion may have a solids content of at least 10 weight-%, preferably at least 20 weight-%, sometimes even at least 25 weight-%. According to one embodiment the solids content of the polymer dispersion may be in a range of 10 - 60 weight-%, preferably 20 - 55 weight-%, more preferably 25 - 45 weight-%.

The monomer solution, i.e. feed of vinyl monomers, or the aqueous polymerisation medium may contain regulating agents useful for the polymerisation, such as chain transfer agents. The regulating agent(s) may be introduced to the polymerisation medium simultaneously, but separately, with the vinyl monomer(s). Alternatively, or in addition, the regulating agent(s) may be introduced as mixture with the monomer solution(s) or feeds. When a regulating agent is used, the amount may be 0.01 - 5 weight-%, preferably 0.01 - 1.0 weight-%, more preferably 0.1 - 0.7 weight-%, calculated from the weight of the vinyl monomers. Sometimes the aqueous polymerisation medium may comprise 0 - 2 weight-%, preferably 0.05 - 2 weight-% or 0.05 - 1 weight-% of regulating agent(s). According to an embodiment the polymerisation is performed without addition and/or use of a regulating agent. Suitable regulating agents may be, for example, sulphur containing organic compounds, such as mercaptans, di- and polysulphides, sulphides or esters of thio- and dithiocarboxylic acids; halogen compounds, alcohols; or aldehydes. According to one preferable embodiment the regulating agent may be terpene-containing compounds, such as terpinolene.

It is possible that the continuous aqueous phase of the polymer dispersion further comprises a stabilizer. The stabilizer can be selected from synthetic stabilators, natural stabilators, electrostatically charged stabilators, and surface active stabilators. The stabilator may be anionic, cationic, amphoteric or non-ionic. The stabilizing effect may, for example, be based on steric stabilisation, electrosteric stabilisation, electrostatic stabilisation or pickering stabilisation.

The aqueous polymerisation medium comprises polysaccharide. Polysaccharide is added to the aqueous polymerisation medium before the start of the polymerisation and the polysaccharide is present during the radical polymerisation. The polysaccharide may function as a protective colloid for the polymer particles in the obtained polymer dispersion. It has been observed that the presence of the polysaccharide provides unexpectedly stabile dispersions with narrow particle size distributions, even if the polymerisation is conducted in the presence of the rosin component. The polysaccharide may be added in amount of 10 - 45 weight-%, preferably 15 - 40 weight-%, more preferably 20 - 35 weight-%, calculated from the total weight of the polymer dispersion, as dry. According to one preferable embodiment, the polysaccharide is selected from a group comprising polysaccharide derivatives, degraded polysaccharides, degraded polysaccharide derivatives and any of their mixtures. The polysaccharide may be selected, for example, from starch, substituted starches, cellulose, substituted celluloses, hemicelluloses, substituted hemicelluloses, chitosan, glucan derivatives, dextrin, degraded starch and any of their mixtures, preferably degraded starch. Preferably the polysaccharide is essentially water-soluble. The polysaccharide has preferably an average molecular weight Mn in a range of 500 - 10 000 g/mol. The polysaccharide, such as starch, or degraded starch, may be anionic, cationic, amphoteric or non-ionic, preferably anionic.

According to one embodiment the polymer dispersion may comprise one or more surfactants which may function as stabilizers.

A water-soluble redox system comprising an oxidant and a reducing agent may be used for initiating the radical polymerisation of the feed of vinyl monomers. The oxidant of the redox system may be selected from peroxides, such as hydrogen peroxide, sodium peroxodisulphate, potassium peroxodisulphate, ammonium peroxodisulphate, dibenzoyl peroxide, dilauroyl peroxide, di-tert-butyl peroxide, tert-butyl hydroperoxide, 1,1,3,3-tetramethylbutyl peroxy-2-ethylhexanoate, cumyl hydroperoxide or bis-cyclohexyl peroxydicarbonate. The reducing agent of the redox system may be selected from sodium sulphite, sodium pyrosulphite, sodium bisulphite, sodium dithionite, sodium hydroxymethanesulphinate or ascorbic acid, or metal salt such as cerium, manganese or iron(II) salt. According to one preferable embodiment the radical polymerisation may be carried out by using a graft-linking water-soluble redox initiator system comprising hydrogen peroxide and a metal salt. The metal salt, such as iron(II) salt may be added to the aqueous polymerisation medium before the start of the polymerisation, while hydrogen peroxide is added in simultaneously but separately with the addition of monomers.

The polymer particles for the polymer dispersion are formed directly by the radical polymerisation of the monomers in the aqueous polymerisation medium comprising polysaccharide. The radical polymerisation may be carried out by a feed process, where the one or more feeds of vinyl monomers are fed into the aqueous polymerisation medium during a polymerisation time, or by a batch process, where the whole feed of vinyl monomers is added into the aqueous polymerisation medium at once in the beginning of the polymerisation, preferably by a feed process. A continuous polymerisation process in a stirred kettle cascade or a flow tube is also possible. In a preferred feed process, the continuous feed(s) of at least one vinyl monomer and the free radical initiator are metered uniformly into the aqueous polymerisation medium, preferably comprising degraded starch, in a stirred reactor. During the entire preparation and polymerisation process, thorough mixing with the aid of any suitable stirring or mixing units is maintained so that the added monomer feed(s) and other components are homogeneously distributed as rapidly as possible.

The radical polymerisation may be performed at a polymerisation temperature in a range of 50 - 100 °C, preferably 60 - 90 °C, more preferably 70 - 90 °C.

The obtained polymer dispersion may have a viscosity of ≤500 mPas, preferably ≤200 mPas, more preferably ≤50 mPas. The viscosity may be in a range of 1 - 500 mPas, preferably 1 - 200 mPas, more preferably 2 - 50 mPas. All the viscosity values are measured at 25 °C, with Brookfield LVDV viscometer, in a small sample adapter with spindle 18, measured at solids content of 25 weight-%.

According to one embodiment of the invention the polymer dispersion is used together with an aluminium compound, such as alum or polyaluminium chloride, in the surface sizing. Use of alum is, however, not necessary, and sufficient surface sizing results can be easily obtained with the polymer dispersion of the present invention, even in absence of alum.

The polymer dispersion according to the present invention is especially suitable for use in surface sizing of cellulosic webs. The surface sizing compositions may, in addition to the polymer dispersion, further comprise surface sizing starch and other additives conventionally used in surface sizing of paper, board and other cellulosic products. Such additives commonly known in the art include, but are not limited to, dispersing agents, antifoaming agents, colorants, inorganic pigments and fillers, anti-curl agents, anti-static agents, additional conventional components such as surfactants, plasticizers, humectants, defoamers, UV absorbers, light fastness enhancers, polymeric dispersants, dye mordants, optical brighteners, levelling agents, rheology modifiers, and strength additives. The additives may be used to further enhance the sizing performance which is obtained with polymer dispersion according to the present invention.

The polymer dispersion may be applied on a cellulosic fibre web, such paper, board or the like, in an amount of 0.1 - 10 kg/t, preferably 0.5 - 6 kg/t, given as dry cellulosic fibre web. The polymer dispersion according to the present invention is suitable for surface sizing of all paper and paper board qualities. The polymer dispersion according to the present invention is particularly suitable for surface sizing of cellulosic fibre webs which comprise recycled fibres.

### EXPERIMENTAL

Some embodiments of the present invention are more closely described in the following non-limiting examples.

The following methods have been used in the examples to characterise dispersion properties.

### Particle size

The particle size measurements of the polymer dispersions were done by using Malvern Zetasizer Nano-device. The particle size measurements of the rosin dispersion were done by Malvern MasterSizer 2000.

### Solids content

The solids content was measured using a Mettler Toledo Halogen moisture analyser.

### Viscosity

The viscosities were measured at 25 °C, with Brookfield LVDV viscometer, in a small sample adapter with spindle 18, 60 rpm.

### Number average molecular weight (Mₙ), weight average molecular weight (M_{w})

The molecular weights were determined by size-exclusion chromatography (SEC) using an Agilent 1100 HPLC system equipped with integrated autosampler, degasser, column oven and refractive index detector. Eluent was N,N-dimethylformamide (DMF) with 5 g/l lithium chloride. Flow rate was 0.6 ml/min at 45 °C (column oven and RI detector). Column set consisted of three Polymer Standard Service GRAM columns (1000Å + 2 x 30Å columns). Samples were freeze-dried prior to the analysis. Injection volume was 50 µl with a sample concentration of 4 mg/ml. For conventional column calibration, narrow molecular weight distribution poly(styrene) standards (Polymer Standards Service) were used to calibrate the system over Mw range 266 - 1210000 g/mol. Calibration curve was created using a GPC Addon software by Agilent.

### Glass transition temperature (T_{g})

The glass transition temperatures were measured from freeze dried samples using a differential scanning calorimeter Mettler Toledo DSC 3+.

### Polymer Dispersion Preparation Examples

The tall oil rosin was commercially obtained and it had characteristic value of a softening point approximately 65 °C and rosin acid content 86 %.

The fortified rosins were fumarated tall oil rosins made of the tall oil rosin. Fortified Rosin 1 had softening point approximately 115 °C and Fortified Rosin 2 had softening point approximately 95 °C.

### Example 1: Preparation of Polymer Dispersion Comprising Tall Oil Rosin

78.7 g of an oxidatively degraded potato starch (Perfectamyl A 4692) was dispersed with stirring in 550 g of demineralized water in a 1 L glass reactor with a cooling/heating jacket under a nitrogen atmosphere. The starch was dissolved by heating the mixture to 95 °C and cooking at 95 °C for 30 minutes. After starch dissolution was complete, 28.6 g of 0.74 % strength aqueous solution of ferrous (II) sulphate heptahydrate was added into the reactor. After 10 minutes 3.4 g of 30 % strength hydrogen peroxide was added. After 40 minutes in 95 °C, the starch degradation was complete.

During starch degradation, in a separate vessel, a mixture was made by blending together 159 g tert-butyl acrylate, 8.4 g of n-butyl acrylate and 16.7 g of the tall oil rosin. The tall oil rosin was dissolved into the monomers.

After cooling the temperature of the reactor with degraded starch to 85 °C, the chemical feeds were started simultaneously. 184.1 g of monomer and tall oil rosin mixture (solution) was fed during 120 minutes. 74.7 g of 5.5 % solution of hydrogen peroxide was fed during 165 min. The reactor temperature was kept at 85 °C during the feeds and 15 minutes after for post-polymerisation. Then the mixture was cooled to 60°C and 5.2 g of 11.7 % strength tert-butyl hydroperoxide solution was added dropwise into the reactor. The temperature was kept at 60 °C for further 60 min. Thereafter, the obtained polymer dispersion was cooled to 50°C and 5.9 g of 10 % strength ethylenediaminetetraacetic acid sodium salt (EDTA-Na) solution was added, followed by pH adjustment to 3.8 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Example 2: Preparation of Polymer Dispersion Comprising Tall Oil Rosin

The polymer dispersion in Example 2 was prepared using the same procedure as in Example 1, with the exceptions that the amount of tert-butyl acrylate was 140.0 g, amount of n-butyl acrylate was 7.4 g and the amount of the tall oil rosin was 36.8 g. Amounts of other materials and the reaction conditions were kept the same as in Example 1. The characteristics of the polymer dispersion is given in Table 1.

### Example 3: Preparation of Polymer Dispersion Comprising Tall Oil Rosin

The polymer dispersion in Example 3 was prepared using the same procedure as in Example 1, with the exceptions that the amount of tert-butyl acrylate was 117.9 g, amount of n-butyl acrylate was 29.5 g and the amount of the tall oil rosin was 36.8 g. Amounts of other materials and the reaction conditions were kept the same as in Example 1. The characteristics of the polymer dispersion is given in Table 1.

### Example 4: Preparation of Polymer Dispersion Comprising Fortified Tall Oil Rosin

57.3 g of an oxidatively degraded potato starch (Perfectamyl A 4692) was dispersed with stirring in 329 g of demineralized water in a 1 L glass reactor with a cooling/heating jacket under a nitrogen atmosphere. The starch was dissolved by heating the mixture to 85 °C and cooking at 85 °C for 30 minutes. After starch dissolution was complete, 28.6 g of 0.66 % strength aqueous solution of ferrous (II) sulphate heptahydrate was added into the reactor. After 10 minutes 3.3 g of 30 % strength hydrogen peroxide was added. After 10 minutes in 85 °C, the starch degradation was complete.

During starch degradation, in a separate vessel, a mixture was made by blending together 90.4 g tert-butyl acrylate, 6.7 g of n-butyl acrylate, 70.3 g of styrene and 16.1 g of Fortified Rosin 1. The Fortified Rosin 1 was dissolved into the monomers. Keeping the temperature of the reactor with the degraded starch at 85 °C, the chemical feeds were started. 183.5 g of monomer and fortified tall oil rosin mixture (solution), as well as 167.4 g of dilution water as separate feed were fed during 160 minutes. Feed of 74.8 g of 5.5 % solution of hydrogen peroxide was started simultaneously with the monomer and water feeds and this feed lasted for 200 min. The reactor temperature was kept at 85 °C during the feeds and 15 minutes after for post polymerization. Then the mixture was cooled to 60 °C and 5.2 g of 11.7 % strength tert-butyl hydroperoxide solution was added dropwise into the reactor. The temperature was kept at 60 °C for further 60 min. Thereafter, the dispersion was cooled to 40 °C and 5.9 g of 10 % strength ethylenediaminetetraacetic acid sodium salt (EDTA-Na) solution was added, followed by pH adjustment to 4.5 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Example 5: Preparation of Polymer Dispersion Comprising Tall Oil Rosin

67.0 g of an oxidatively degraded potato starch (Perfectamyl A 4692) was dispersed with stirring in 372.1 g of demineralized water in a 1 L glass reactor with a cooling/heating jacket under a nitrogen atmosphere. The starch was dissolved by heating the mixture to 85 °C and cooking at 85 °C for 30 minutes. After starch dissolution was complete, 28.6 g of 0.66 % strength aqueous solution of ferrous (II) sulphate heptahydrate was added into the reactor. After 10 minutes 3.9 g of 30 % strength hydrogen peroxide was added. After 10 minutes in 85 °C, the starch degradation was complete.

During starch degradation, in a separate vessel, a mixture was made by blending together 117.2 g tert-butyl acrylate, 50.2 g of styrene and 25.1 g of the tall oil rosin. The tall oil rosin was dissolved into the monomers.

Keeping the temperature of the reactor with degraded starch at 85 °C, the chemical feeds were started. 192.5 g of monomer and tall oil rosin mixture (solution), as well as 167.4 g of dilution water as separate feed were fed during 120 minutes. Feed of 74.8 g of 5.5 % solution of hydrogen peroxide was started simultaneously with the monomer and water feeds and this feed lasted for 165 min. The reactor temperature was kept at 85 °C during the feeds and 15 minutes after for post-polymerisation. Then the mixture was cooled to 60 °C and 5.2 g of 11.7 % strength tert-butyl hydroperoxide solution was added dropwise into the reactor. The temperature was kept at 60 °C for further 60 min. Thereafter, the dispersion was cooled to 40 °C and 5.9 g of 10 % strength ethylenediaminetetraacetic acid sodium salt (EDTA-Na) solution was added, followed by pH adjustment to 4.5 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Example 6: Preparation of Polymer Dispersion Comprising Fortified Tall Oil Rosin

67.0 g of an oxidatively degraded potato starch (Perfectamyl A 4692) was dispersed with stirring in 372 g of demineralized water in a 1 L glass reactor with a cooling/heating jacket under a nitrogen atmosphere. The starch was dissolved by heating the mixture to 85 °C and cooking at 85 °C for 30 minutes. After starch dissolution was complete, 28.6 g of 0.66 % strength aqueous solution of ferrous (II) sulphate heptahydrate was added into the reactor. After 10 minutes 3.9 g of 30 % strength hydrogen peroxide was added. After 10 minutes in 85 °C, the starch degradation was complete.

During starch degradation, in a separate vessel, a mixture was made by blending together 90.4 g tert-butyl acrylate, 6.7 g of n-butyl acrylate, 70.3 g of styrene and 25.1 g of Fortified Rosin 1. The Fortified Rosin 1 was dissolved into the monomers.

Keeping the temperature of the reactor with the degraded starch at 85 °C, the chemical feeds were started. 192.5 g of monomer and fortified rosin mixture (solution), as well as 167.4 g of dilution water as separate feed were fed during 160 minutes. Feed of 73.2 g of 5.5 % solution of hydrogen peroxide was started simultaneously with the monomer and water feeds and this feed lasted for 200 min. The reactor temperature was kept at 85 °C during the feeds and 15 minutes after for post-polymerisation. Then the mixture was cooled to 60 °C and 5.2 g of 11.7 % strength tert-butyl hydroperoxide solution was added dropwise into the reactor. The temperature was kept at 60 °C for further 60 min. Thereafter, the dispersion was cooled to 40 °C and 5.9 g of 10 % strength ethylenediaminetetraacetic acid sodium salt (EDTA-Na) solution was added, followed by pH adjustment to 4.5 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Example 7: Preparation of Polymer Dispersion Comprising Tall Oil Rosin

67.0 g of an oxidatively degraded potato starch (Perfectamyl A 4692) was dispersed with stirring in 372 g of demineralized water in a 1 L glass reactor with a cooling/heating jacket under a nitrogen atmosphere. The starch was dissolved by heating the mixture to 85 °C and cooking at 85 °C for 30 minutes. After starch dissolution was complete, 28.6 g of 0.66 % strength aqueous solution of ferrous (II) sulphate heptahydrate was added into the reactor. After 10 minutes 3.9 g of 30 % strength hydrogen peroxide was added. After 10 minutes in 85 °C, the starch degradation was complete.

During starch degradation, in a separate vessel, a mixture was made by blending together 90.4 g tert-butyl acrylate, 6.7 g of n-butyl acrylate, 70.3 g of styrene and 24.1 g of the tall oil rosin. The tall oil rosin was dissolved into the monomers.

Keeping the temperature of the reactor with degraded starch at 85 °C, the chemical feeds were started. 191.5 g of monomer and tall oil rosin mixture (solution), as well as 167.4 g of dilution water as separate feed were fed during 120 minutes. Feed of 74.8 g of 5.5 % solution of hydrogen peroxide was started simultaneously with the monomer and water feeds and this feed lasted for 165 min. The reactor temperature was kept at 85 °C during the feeds and 15 minutes after for post-polymerisation. Then the mixture was cooled to 60 °C and 5.2 g of 11.7 % strength tert-butyl hydroperoxide solution was added dropwise into the reactor. The temperature was kept at 60 °C for further 60 min. Thereafter, the dispersion was cooled to 40 °C and 5.9 g of 10 % strength ethylenediaminetetraacetic acid sodium salt (EDTA-Na) solution was added, followed by pH adjustment to 4.5 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Example 8: Preparation of Polymer Dispersion Comprising Tall Oil Rosin

63.2 g of an oxidatively degraded potato starch (Perfectamyl A 4692) was dispersed with stirring in 351.2 g of demineralized water in a 1 L glass reactor with a cooling/heating jacket under a nitrogen atmosphere. The starch was dissolved by heating the mixture to 85 °C and cooking at 85 °C for 30 minutes. After starch dissolution was complete, 28.6 g of 0.66 % strength aqueous solution of ferrous (II) sulphate heptahydrate was added into the reactor. After 10 minutes 3.7 g of 30 % strength hydrogen peroxide was added. After 10 minutes in 85 °C, the starch degradation was complete.

During starch degradation, in a separate vessel, a mixture was made by blending together 85.3 g tert-butyl acrylate, 6.3 g of n-butyl acrylate, 66.4 g of styrene and 33.5 g of the tall oil rosin. The tall oil rosin was dissolved into the monomers.

Keeping the temperature of the reactor with degraded starch at 85 °C, the chemical feeds were started. 191.5 g of monomer and tall oil rosin mixture (solution), as well as 158 g of dilution water as separate feed were fed during 120 minutes. Feed of 74.8 g of 5.5 % solution of hydrogen peroxide was started simultaneously with the monomer and water feeds and this feed lasted for 165 min. The reactor temperature was kept at 85 °C during the feeds and 15 minutes after for post polymerization. Then the mixture was cooled to 60 °C and 5.2 g of 11.7 % strength tert-butyl hydroperoxide solution was added dropwise into the reactor. The temperature was kept at 60 °C for further 60 min. Thereafter, the dispersion was cooled to 40 °C and 5.9 g of 10 % strength ethylenediaminetetraacetic acid sodium salt (EDTA-Na) solution was added, followed by pH adjustment to 4.5 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Example 9: Preparation of Polymer Dispersion Comprising Fortified Tall Oil Rosin

78.7 g of an oxidatively degraded potato starch (Perfectamyl A 4692) was dispersed with stirring in 550 g of demineralized water in a 1 L glass reactor with a cooling/heating jacket under a nitrogen atmosphere. The starch was dissolved by heating the mixture to 95 °C and cooking at 95 °C for 30 minutes. After starch dissolution was complete, 28.6 g of 0.74 % strength aqueous solution of ferrous (II) sulphate heptahydrate was added into the reactor. After 10 minutes 3.4 g of 30 % strength hydrogen peroxide was added. After 40 minutes in 95 °C, the starch degradation was complete.

During starch degradation, in a separate vessel, a mixture was made by blending together 140.0 g tert-butyl acrylate, 7.4 g of n-butyl acrylate and 36.8 g of Fortified Rosin 2. The Fortified Rosin 2 was dissolved into the monomers.

After cooling the temperature of the reactor with the degraded starch to 85°C, the chemical feeds were started simultaneously. 184.2 g of monomer and fortified rosin mixture (solution) was fed during 120 minutes. 69.2 g of 5.5 % solution of hydrogen peroxide was fed during 165 min. The reactor temperature was kept at 85 °C during the feeds and 15 minutes after for post-polymerisation. Then the mixture was cooled to 60 °C and 5.2 g of 11.7 % strength tert-butyl hydroperoxide solution was added dropwise into the reactor. The temperature was kept at 60 °C for further 60 min. Thereafter, the dispersion was cooled to 50 °C and 5.9 g of 10 % strength ethylenediaminetetraacetic acid sodium salt (EDTA-Na) solution was added, followed by pH adjustment to 3.8 with 25 % strength sodium hydroxide solution and cooling to room temperature. Filtration was performed using a 100 µm filter cloth. A finely divided polymer dispersion was obtained. The characteristics of the polymer dispersion is given in Table 1.

### Comparative Example 1: Preparation of Polymer Dispersion Without Tall Oil Rosin

78.7 g of an oxidatively degraded potato starch (Perfectamyl A 4692) was dispersed with stirring into 550 g of demineralized water in a 1 L glass reactor with a cooling/heating jacket under a nitrogen atmosphere. The starch was dissolved by heating the mixture to 95 °C and stirring at 95 °C for 30 minutes. After starch dissolution was complete, 28.6 g of 0.74 w-% strength aqueous solution of ferrous (II) sulphate heptahydrate was added into the reactor. After 10 minutes 3.4 g of 30 w-% strength hydrogen peroxide was added. After 40 minutes, the starch degradation was complete.

During the starch degradation 159.0 g tert-butyl acrylate, 8.4 g n-butyl acrylate and 2.5 g 1-dodecyl mercaptan were mixed.

After cooling the temperature of the reactor with the degraded starch to 85 °C, the chemical feeds were started simultaneously. The mixture of the monomers and 1-dodecyl mercaptan was fed during 120 minutes. 74.7 g of 5.5 w-% solution of hydrogen peroxide was fed during 165 min. The reactor temperature was kept at 85 °C during the feeds and 15 minutes after for post-polymerisation. Then the mixture was cooled to 60 °C and 5.2 g of 11.7 w-% strength tert-butyl hydroperoxide solution was added into the reactor. The temperature was kept at 60 °C for further 60 min. Thereafter, the polymer dispersion was cooled to 50 °C and 5.9 g of 10 w-% strength ethylenediaminetetraacetic acid sodium salt solution was added, followed by pH adjustment to 3.8 with sodium hydroxide solution and cooling to room temperature. Filtration was performed using a 100 µm filter cloth. A finely divided polymer dispersion was obtained. The characteristics of the polymer dispersion is given in Table 1.

### Comparative Example 2: Preparation of Polymer Dispersion Without Tall Oil Rosin

57.7 g of an oxidatively degraded potato starch (Perfectamyl A 4692) was dispersed with stirring into 346 g of demineralized water in a 1 L glass reactor with a cooling/heating jacket under a nitrogen atmosphere. The starch was dissolved by heating the mixture to 95 °C and stirring at 95 °C for 30 minutes. After starch dissolution was complete, 8.8 g of 2.17 w-% strength aqueous solution of ferrous (II) sulphate heptahydrate was added into the reactor. After 10 minutes 6.0 g of 15 w-% strength hydrogen peroxide was added. After 40 minutes, the starch solution was diluted with addition of 167 g demineralized water.

During the starch degradation 98.9 g tert-butyl acrylate, 8.2 g n-butyl acrylate, 57.7 g styrene, and 2.4 g 1-dodecyl mercaptan were mixed.

After cooling the temperature of the reactor with the degraded starch to 85 °C, the chemical feeds were started simultaneously. The mixture of the monomers and 1-dodecyl mercaptan was fed during 135 minutes. 56.0 g of 2.7 w-% solution of hydrogen peroxide was fed during 137 min. The reactor temperature was kept at 85 °C during the feeds and 15 minutes after for post polymerization. Then the mixture was cooled to 60 °C and 4.5 g of 11.7 w-% strength tert-butyl hydroperoxide solution was added into the reactor. The temperature was kept at 60 °C for further 60 min. Thereafter, the polymer dispersion was cooled to 40 °C and 5.2 g of 10 w-% strength ethylenediaminetetraacetic acid sodium salt solution was added, followed by pH adjustment to 4.5 with sodium hydroxide solution and cooling to room temperature. Filtration was performed using a 100 µm filter cloth. A finely divided polymer dispersion was obtained. The characteristics of the polymer dispersion is given in Table 1.

**Table 1. Characteristics of the polymer dispersions made in Examples 1 - 9 and Comparative Examples 1 - 2**

| Sample | Solids content [%] | Viscosity [mPas] | Particle size d90 [nm] | Particle size d50 [nm] | Molecular weight, Mn [g/mol] | Molecular weight, Mw [g/mol] | Glass transition T_{g} [°C] |
|---|---|---|---|---|---|---|---|
| Example 1 | 27.1 | 6 | 69 | 40 | 5360 | 22000 | 40 |
| Example 2 | 26.8 | 8 | 64 | 33 | 4520 | 15400 | 39 |
| Example 3 | 26.8 | 9 | 64 | 33 | 4570 | 15600 | 26 |
| Example 4 | 26.9 | 7 | 85 | 47 | 7910 | 89400 | 66 |
| Example 5 | 27.2 | 11 | 68 | 30 | 6400 | 25000 | 63 |
| Example 6 | 27.1 | 7 | 91 | 51 | 6700 | 31000 | 66 |
| Example 7 | 27.1 | 9 | 72 | 36 | 7000 | 26000 | 66 |
| Example 8 | 27.5 | 10 | 74 | 35 | 6800 | 24000 | 64 |
| Example 9 | 26.6 | 12 | 84 | 46 | 4200 | 14100 | 40 |
| Comparative example 1 | 25.9 | 5 | 102 | 63 | 4000 | 22250 | 33 |
| Comparative example 2 | 26.6 | 8 | 95 | 57 | 6670 | 29100 | 52 |

### Application Examples

Sizing performance of the surface size compositions were tested on an internally unsized recycled fibre linerboard which had base weight of 140 g/m². The sheets were run through Mathis horizontal pond size press type 5607 at 2 m/min (2 Bar). The temperature of surface size composition and the size press nip was adjusted to 60 °C. The sheets were dried at 95 °C using an AMC drum dryer at speed 50, giving drying time of 1.5 minutes. Sizing efficiency was determined by measuring Cobb₆₀ sizing degree according to standard ISO 535.

### Application Example 1: Sizing Performance Without Alum

Surface size compositions were prepared by dissolving starch first into water according to its common starch cooking instruction. The dissolved starch in solution form was then blended with a polymer dispersion, as defined in Table 2.

Tests were done with 8 % solution of Raisamyl 01121 starch.

The results are shown in Table 2. It is seen that the sizing efficiency is not decreased even if the amount of the polymer in the sizing composition is decreasing. It is also seen that alum is not needed for good sizing efficiency.

**Table 2 Sizing performance results of Application Example 1**

| | Cobb₆₀ g/m² | | |
|---|---|---|---|
| Dosage of polymer dispersion, w-% of starch as dry solids | 0.08 | 0.16 | 0.24 |
| Example 1 | 61 | 25 | 23 |
| Example 2 | 64 | 26 | 23 |
| Example 3 | 68 | 28 | 22 |
| Example 4 | 104 | 59 | 38 |
| Example 6 | 94 | 48 | 28 |
| Example 7 | 97 | 55 | 31 |
| Example 8 | 100 | 56 | 30 |
| Comparative example 1 | 66 | 27 | 24 |
| Comparative example 2 | 100 | 57 | 27 |

### Application Example 2: Sizing Performance

Surface size compositions were prepared as in Application Example 1. Alum, when used, was added to the surface size composition in amount of 1 weight-%, calculated from dry starch, prior to the surface sizing.

In comparative tests 3 and 4, a rosin dispersion was prepared by dispersing in water a fumarated tall oil rosin, which had softening point approximately 95 °C. The rosin dispersion had a particle size D90 of 1.3 µm and particle size D50 of 0.5 µm, measured on Mastersizer. The rosin content of the rosin dispersion was 84 w-% of its dry solids.

The results of Application Example 2 are given in Table 3. It can be seen that polymer dispersion where the tall oil rosin is dissolved in the monomers before polymerisation provides better sizing results than the rosin dispersed in water.

**Table 3 Sizing performance results of Application Example 2**

| | Cobb₆₀ g/m² | | |
|---|---|---|---|
| Dosage of polymer/rosin dispersion, w-% of starch as dry solids | 0.08 | 0.16 | 0.24 |
| Example 9 | 99 | 53 | 29 |
| Example 9 + alum | 54 | 31 | 24 |
| Comparative Example 2 + alum | 106 | 43 | 28 |
| Comparative test 3: Rosin dispersion | 124 | 120 | 114 |
| Comparative test 4: Rosin dispersion + alum | 71 | 67 | 79 |

## Claims

1. Polymer dispersion, which comprises polymer particles dispersed in an aqueous continuous phase, wherein the polymer particles are obtained by a radical polymerisation of one or more feeds of vinyl monomers in an aqueous polymerisation medium comprising polysaccharide, wherein the vinyl monomers comprise at least one alkyl (meth)acrylate, **characterised in that** a rosin component is dissolved into at least one of the feeds of the vinyl monomers before the radical polymerisation of the vinyl monomers.

2. Polymer dispersion according to claim 1, **characterised in that** the rosin component comprises rosin and/or rosin derivative, such as one or more rosin esters, dimerised rosins, polymerised rosins, hydrogenated rosins, fortified rosins and unfortified rosins.

3. Polymer dispersion according to claim 1 or 2, **characterised in that** the rosin component is selected from a group consisting of tall oil rosin, wood rosin, gum rosin, their derivatives and any of their mixtures.

4. Polymer dispersion according to claim 1, 2 or 3, **characterised in that** the polymer dispersion comprises the rosin component in an amount of 0.01 - 70 weight-%, preferably 1 - 60 weight-%, more preferably 1.5 - 49 weight-%, calculated from the total weight of vinyl monomers and the rosin component, as dry.

5. Polymer dispersion according to claim 4, **characterised in that** the polymer dispersion comprises the rosin component in the amount of 10 - 35 weight-%, preferably 15 - 34 weight-%, calculated from the total weight of the vinyl monomers and the rosin component, as dry.

6. Polymer dispersion according to any of preceding claims 1 - 5, **characterised in that** the vinyl monomers comprise
- at least one first monomer (a) which is selected from alkyl (meth)acrylates, such as C1-C18 alkyl (meth)acrylates, and any of their mixtures, and
- at least one second monomer (b) which is selected from styrene, substituted styrenes, such as α-methylstyrene, vinyltoluene, ethylvinyltoluene, chloromethylstyrene, and any of their mixtures.

7. Polymer dispersion according to claim 6, **characterised in that** the vinyl monomers comprise
- 51 - 100 weight-%, preferably 55 - 99.5 weight-%, more preferably 60 - 99 weight-% or 65 - 99 weight-%, of the first monomer (a), and/or
- 0 - 49 weight-%, preferably 0.5 - 45 weight-%, more preferably 1 - 40 weight-% or 1 - 35 weight-%, of the second monomer (b),
calculated from the total weight of the monomers, as dry.

8. Polymer dispersion according to any of the preceding claims 1 - 7, **characterised in that** the polysaccharide is selected from polysaccharide derivatives, degraded polysaccharides, degraded polysaccharide derivatives and any of their mixtures.

9. Polymer dispersion according claim 1 - 8, **characterised in that** polysaccharide is selected from starch, substituted starches, cellulose, substituted celluloses, hemicelluloses, substituted hemicelluloses, chitosan, glucan derivatives, dextrin, degraded starch and any of their mixtures.

10. Polymer dispersion according to any of the preceding claims 1 - 9, **characterised in that** the polymer dispersion comprises polymer particles, which have
- a particle size D50 ≤200 nm, preferably ≤120 nm, more preferably ≤80 nm, even more preferably ≤55 nm, and/or
- a particle size D90 ≤500 nm, preferably ≤200 nm, more preferably ≤140 nm, even more preferably ≤95 nm.

11. Polymer dispersion according to any of the preceding claims 1 - 10, **characterised in that** the polymer dispersion has a weight average molecular weight Mw in the range 1000 - 100 000 g/mol, preferably 5000 - 80 000 g/mol, more preferably 10 000 - 40 000 g/mol.

12. Use of a polymer dispersion according to any of claims 1 - 11 for surface sizing of a cellulosic fibre web, such paper, board or the like, preferably in an amount of 0.1 - 10 kg/t, preferably 0.5 - 6 kg/t, given as dry cellulosic fibre web.

13. Use according to claim 12, **characterised in that** the polymer dispersion is used together with an aluminium compound, such as alum or polyaluminium chloride, in the surface sizing.

14. Method for producing a polymer dispersion comprising polymer particles in an aqueous continuous phase, for surface sizing of a cellulosic fibre web, such as paper, board or the like, the method comprising
- obtaining vinyl monomer solution, which comprises alkyl (meth)acrylate monomers,
- dissolving a rosin component to the vinyl monomer solution,
- feeding at least one feed of the vinyl monomer solution comprising the rosin component and a polymerisation initiator into an aqueous polymerisation medium comprising a polysaccharide,
- conducting a radical polymerisation of the vinyl monomer solution comprising the rosin component.

15. Method according to claim 14, **characterised in that** the radical polymerisation is performed at a polymerisation temperature in a range of 50 - 100 °C, preferably 60 - 90 °C, more preferably 70 - 90 °C.

## Patentansprüche

1. Polymerdispersion, die Polymerpartikel umfasst, die in einer wässrigen kontinuierlichen Phase dispergiert sind, wobei die Polymerpartikel durch eine radikale Polymerisation von einer oder mehreren Zuführungen von Vinylmonomeren in einem wässrigen Polymerisationsmedium, das Polysaccharid umfasst, erhalten werden, wobei die Vinylmonomere mindestens ein Alkyl(meth)acrylat umfassen, **gekennzeichnet dadurch, dass** vor der radikalen Polymerisation der Vinylmonomere eine Harzkomponente in mindestens einer der Zuführungen der Vinylmonomere aufgelöst ist.

2. Polymerdispersion nach Anspruch 1, **gekennzeichnet dadurch, dass** die Harzkomponente ein Harz oder ein Harzderivat, wie ein oder mehrere Harzester, dimerisierte Harze, polymerisierte Harze, hydrierte Harze, verstärkte Harze und unverstärkte Harze, umfasst.

3. Polymerdispersion nach Anspruch 1 oder 2, **gekennzeichnet dadurch, dass** die Harzkomponente ausgewählt ist aus einer Gruppe bestehend aus Tallölharz, Holzharz, Balsamharz, ihren Derivaten sowie jeglichen ihrer Mischungen.

4. Polymerdispersion nach Anspruch 1, 2 oder 3, **gekennzeichnet dadurch, dass** die Polymerdispersion die Harzkomponente in einer Menge von 0,01-70 Gew.-%, bevorzugt 1-60 Gew.-%, mehr bevorzugt 1,5-49 Gew.-%, berechnet aus dem Gesamtgewicht von Vinylmonomeren und der Harzkomponente als Trockengewicht, umfasst.

5. Polymerdispersion nach Anspruch 4, **gekennzeichnet dadurch, dass** die Polymerdispersion die Harzkomponente in der Menge von 10-35 Gew.-%, bevorzugt 15-34 Gew.-%, berechnet aus dem Gesamtgewicht der Vinylmonomere und der Harzkomponente als Trockengewicht, umfasst.

6. Polymerdispersion nach einem der vorhergehenden Ansprüche 1 bis 5, **gekennzeichnet dadurch, dass** die Vinylmonomere Folgendes umfassen:
- mindestens ein erstes Monomer, (a) das ausgewählt ist aus Alkyl(meth)acrylaten, wie C1-C18 Alkyl(meth)acrylaten, sowie jeglicher ihrer Mischungen, und
- mindestens ein zweites Monomer, (b) das ausgewählt ist aus Styrol, substituierten Styrolen, wie α-Methylstyrol, Vinyltoluol, Ethylvinyltoluol, Chlormethylstyrol sowie jeglicher ihrer Mischungen.

7. Polymerdispersion nach Anspruch 6, **gekennzeichnet dadurch, dass** die Vinylmonomere Folgendes umfassen:
- 51-100 Gew.-%, bevorzugt 55-99,5 Gew.-%, mehr bevorzugt 60-99 Gew.-% oder 65-99 Gew.-% des ersten Monomers (a), und/oder
- 0-49 Gew.-%, bevorzugt 0,5-45 Gew.-%, mehr bevorzugt 1-40 Gew.-% oder 1-35 Gew.-%, des zweiten Monomers (b),
berechnet aus dem Gesamtgewicht der Monomere, als Trockengewicht.

8. Polymerdispersion nach einem der vorhergehenden Ansprüche 1 bis 7, **gekennzeichnet dadurch, dass** das Polysaccharid ausgewählt ist aus Polysaccharidderivaten, abgebauten Polysacchariden, abgebauten Polysaccharidderivaten sowie jeglicher ihrer Mischungen.

9. Polymerdispersion nach Anspruch 1 bis 8, **gekennzeichnet dadurch, dass** das Polysaccharid ausgewählt ist aus Stärke, substituierten Stärken, Cellulose, substituierten Cellulosen, Hemicellulosen, substituierten Hemicellulosen, Chitosan, Glucanderivaten, Dextrin, abgebauter Stärke sowie jeglicher ihrer Mischungen.

10. Polymerdispersion nach einem der vorhergehenden Ansprüche 1 bis 9, **gekennzeichnet dadurch, dass** die Polymerdispersion Polymerpartikel umfasst, die Folgendes aufweisen:
- eine Partikelgröße D50 ≤200 nm, bevorzugt ≤120 nm, mehr bevorzugt ≤80 nm, noch mehr bevorzugt ≤55 nm, und/oder
- eine Partikelgröße D90 ≤500 nm, bevorzugt ≤200 nm, mehr bevorzugt ≤140 nm, noch mehr bevorzugt ≤95 nm.

11. Polymerdispersion nach einem der vorhergehenden Ansprüche 1-10, **gekennzeichnet dadurch, dass** die Polymerdispersion ein gewichtsmittleres Molekulargewicht Mw in dem Bereich von 1000-100.000 g/mol, bevorzugt 5000-80.000 g/mol, mehr bevorzugt 10.000-40.000 g/mol aufweist.

12. Verwendung einer Polymerdispersion nach einem der Ansprüche 1-11 zur Oberflächenleimung einer Cellulosefaserbahn, wie Papier, Pappe oder dergleichen, bevorzugt in einer Menge von 0,1-10 kg/t, bevorzugt 0,5-6 kg/t, angegeben als trockene Cellulosefaserbahn.

13. Verwendung nach Anspruch 12, **gekennzeichnet dadurch, dass** die Polymerdispersion zusammen mit einer Aluminiumverbindung, wie einem Aluminium- oder Polyaluminiumchlorid, in der Oberflächenleimung verwendet wird.

14. Verfahren zum Herstellen einer Polymerdispersion, die Polymerpartikel in einer wässrigen kontinuierlichen Phase umfasst, zur Oberflächenleimung einer Cellulosefaserbahn, wie Papier, Pappe oder dergleichen, das Verfahren umfassend:
- Erhalten einer Vinylmonomerlösung, die Alkyl(meth)acrylatmonomere umfasst,
- Auflösen einer Harzkomponente in der Vinylmonomerlösung,
- Zuführen von mindestens einer Zuführung der Vinylmonomerlösung, die die Harzkomponente und einen Polymerisationsinitiator umfasst, zu einem wässrigen Polymerisationsmedium, das ein Polysaccharid umfasst,
- Vornehmen einer radikalen Polymerisation der Vinylmonomerlösung, die die Harzkomponente umfasst.

15. Verfahren nach Anspruch 14, **gekennzeichnet dadurch, dass** die radikale Polymerisation bei einer Polymerisationstemperatur in einem Bereich von 50-100 °C, bevorzugt 60-90 °C, mehr bevorzugt 70-90 °C durchgeführt wird.

## Revendications

1. Dispersion de polymère, qui comprend des particules de polymère dispersées dans une phase aqueuse continue, dans laquelle les particules de polymère sont obtenues par une polymérisation radicalaire d'une ou plusieurs charges de monomères de vinyle dans un milieu de polymérisation aqueux comprenant un polysaccharide, dans laquelle les monomères de vinyle comprennent au moins un (méth)acrylate d'alkyle, **caractérisée en ce qu'**un composant colophane est dissous dans au moins l'une des charges des monomères de vinyle avant la polymérisation radicalaire des monomères de vinyle.

2. Dispersion de polymère selon la revendication 1, **caractérisée en ce que** le composant colophane comprend de la colophane et/ou un dérivé de colophane, tel qu'un ou plusieurs esters de colophane, colophanes dimérisées, colophanes polymérisées, colophanes hydrogénées, colophanes enrichies et colophanes non enrichies.

3. Dispersion de polymère selon la revendication 1 ou 2, **caractérisée en ce que** le composant colophane est sélectionné dans un groupe consistant en colophane d'huile de tall, colophane de bois, colophane de gemme, leurs dérivés et l'un quelconque de leurs mélanges.

4. Dispersion de polymère selon la revendication 1, 2 ou 3, **caractérisée en ce que** la dispersion de polymère comprend le composant colophane dans une quantité de 0,01 à 70 % en poids, de préférence de 1 à 60 % en poids, plus préférablement de 1,5 à 49 % en poids, calculée à partir du poids total de monomères de vinyle et du composant colophane, à sec.

5. Dispersion de polymère selon la revendication 4, **caractérisée en ce que** la dispersion de polymère comprend le composant colophane dans la quantité de 10 à 35 % en poids, de préférence de 15 à 34 % en poids, calculée à partir du poids total des monomères de vinyle et du composant colophane, à sec.

6. Dispersion de polymère selon l'une quelconque des revendications 1 à 5 précédentes, **caractérisée en ce que** les monomères de vinyle comprennent
- au moins un premier monomère (a) qui est sélectionné parmi les (méth)acrylates d'alkyle, tels que (méth)acrylates d'alkyle en C1-C18, et l'un quelconque de leurs mélanges, et
- au moins un deuxième monomère (b) qui est sélectionné parmi le styrène, les styrènes substitués, tels que α-méthylstyrène, le vinyltoluène, l'éthylvinyltoluène, le chlorométhylstyrène et l'un quelconque de leurs mélanges.

7. Dispersion de polymère selon la revendication 6, **caractérisée en ce que** les monomères de vinyle comprennent
- 51 à 100 % en poids, de préférence 55 à 99,5 % en poids, plus préférablement 60 à 99 % en poids ou 65 à 99 % en poids du premier monomère (a), et/ou
- 0 à 49 % en poids, de préférence 0,5 à 45 % en poids, plus préférablement 1 à 40 % en poids ou 1 à 35 % en poids, du deuxième monomère (b),
calculés à partir du poids total des monomères, à sec.

8. Dispersion de polymère selon l'une quelconque des revendications 1 à 7 précédentes, **caractérisée en ce que** le polysaccharide est sélectionné parmi les dérivés de polysaccharide, les polysaccharides dégradés, les dérivés de polysaccharides dégradés et l'un quelconque de leurs mélanges.

9. Dispersion de polymère selon les revendications 1 à 8, **caractérisée en ce que** le polysaccharide est sélectionné parmi l'amidon, les amidons substitués, la cellulose, les celluloses substituées, les hémicelluloses, les hémicelluloses substituées, le chitosane, les dérivés de glucane, la dextrine, l'amidon dégradé et l'un quelconque de leurs mélanges.

10. Dispersion de polymère selon l'une quelconque des revendications 1 à 9 précédentes, **caractérisée en ce que** la dispersion de polymère comprend des particules de polymère, qui ont
- une taille de particules D50 ≤ 200 nm, de préférence ≤ 120 nm, plus préférablement ≤ 80 nm, plus préférablement encore ≤ 55 nm, et/ou
- une taille de particules D90 ≤ 500 nm, de préférence ≤ 200 nm, plus préférablement ≤ 140 nm, plus préférablement encore ≤ 95 nm.

11. Dispersion de polymère selon l'une quelconque des revendications 1 à 10 précédentes, **caractérisée en ce que** la dispersion de polymère a une masse moléculaire moyenne en poids Mw dans la plage de 1000 à 100 000 g/mol, de préférence de 5000 à 80 000 g/mol, plus préférablement de 10 000 à 40 000 g/mol.

12. Utilisation d'une dispersion de polymère selon l'une quelconque des revendications 1 à 11 pour l'encollage de surface d'une bande de fibres cellulosiques, telle que du papier, du carton ou similaire, de préférence dans une quantité de 0,1 à 10 kg/t, de préférence de 0,5 à 6 kg/t, donnée sous forme de bande de fibres cellulosiques à sec.

13. Utilisation selon la revendication 12, **caractérisée en ce que** la dispersion de polymère est utilisée conjointement avec un composé d'aluminium, tel qu'alun ou polychlorure d'aluminium, dans l'encollage de surface.

14. Procédé de production d'une dispersion de polymère comprenant des particules de polymère dans une phase aqueuse continue, pour l'encollage de surface d'une bande de fibres cellulosiques, telle que du papier, du carton ou similaire, le procédé comprenant
- l'obtention d'une solution de monomère de vinyle, qui comprend des monomères de (méth)acrylate d'alkyle,
- la dissolution d'un composant colophane dans la solution de monomère de vinyle,
- l'introduction d'au moins une charge de la solution de monomère de vinyle comprenant le composant colophane et un initiateur de polymérisation dans un milieu de polymérisation aqueux comprenant un polysaccharide,
- la réalisation d'une polymérisation radicalaire de la solution de monomère de vinyle comprenant le composant colophane.

15. Procédé selon la revendication 14, **caractérisé en ce que** la polymérisation radicalaire est effectuée à une température de polymérisation dans une plage de 50 à 100 °C, de préférence de 60 à 90 °C, plus préférablement de 70 à 90 °C.
